# EUROPÄISCHE PATENTSCHRIFT

(11) **EP 1 120 306 B1**
(45) Veröffentlichungstag und Bekanntmachung des Hinweises auf die Patenterteilung: **18.07.2007**
(21) Anmeldenummer: 01101758.9
(22) Anmeldetag: 26.01.2001
(51) Int. Cl.: B60L 5/32

(54) **Stromabnehmer**
Current collector
Collecteur de courant

(30) Priorität: 29.01.2000 DE 10003902
(43) Veröffentlichungstag der Anmeldung: 01.08.2001
(73) Patentinhaber: Schunk Bahntechnik GmbH, 5101 Bergheim bei Salzburg (AT)
(72) Erfinder: Santner, Josef, 5300 Hallwang (AT)
(74) Vertreter: Stoffregen, Hans-Herbert

(56) Entgegenhaltungen:
- AU-B- 536 278
- DE-A- 19 604 535
- US-A- 5 087 797

## Beschreibung

Die Erfindung bezieht sich auf einen Stromabnehmer für elektrisch betriebene Fahrzeuge umfassend an einen Fahrdraht anlegbare Wippe, Unter- und Oberschere sowie einen Antrieb, über den der Stromabnehmer an den Fahrdraht anlegbar oder von diesem absenkbar ist. (Siehe US-A-5 087 797).

Um entsprechende z.B. aus dem DE 94 21 460 U1 bekannte Stromabnehmer an einen Fahrdraht anzulegen bzw. von diesem zu beabstanden, können als Antriebsmittel Schraubenzugfedern und Druckluftbalgzylinder verwendet werden, die jeweils mit einer Vielzahl von Vor- und Nachteilen behaftet sind.

So ist es ein Vorteil eines Schraubenzugfederantriebs, dass die Schraubenzugfeder in Arbeitsrichtung "Zug" im Stromabnehmer integriert wird, so dass eine zusätzliche Führung nicht erforderlich ist. Aufgrund der Arbeitsrichtung der Feder ist des Weiteren eine sichere Positionierung im Grundrahmen des Stromabnehmers möglich. Durch den geringen Durchmesser der Schraubenfeder ergibt sich des Weiteren eine geringe Bauhöhe des Stromabnehmers selbst.

Um die erforderlichen Kräfte zum Anheben des Stromabnehmers zu erzeugen, weisen die Schraubenzugfedern ein relativ hohes Gewicht auf. Demzufolge ist die Masse des Gesamtstromabnehmers recht groß, wodurch auch das Gesamtgewicht des elektrisch betriebenen Fahrzeuges wie Schienenfahrzeuges erhöht wird.

Durch das Material der Feder bedingt ändern sich deren Federeigenschaften nach den ersten Zugbewegungen mit der Folge, dass ein Nacheinstellen erforderlich ist. Nachteilig ist des Weiteren, dass die Anpreßkraft des Stromabnehmers über die Spannung der Zugfedern sich allein mit relativ großem Aufwand einstellen läßt. Auch ergeben sich Kostennachteile in Bezug auf die Herstellung der Schraubenzugfedern einschließlich der für die Endbefestigungen der Feder erforderlichen Federteller. Zusätzlich bedarf es eines Antriebs zum Absenken der Stromabnehmers, der technisch aufwendig und teuer ist.

Druckluftbalgzylinderantriebe zeigen den Vorteil, dass das Gewicht der einzeln eingesetzten Druckluftzylinder relativ gering ist. Auch ist eine einfache Einstellmöglichkeit der Stromabnehmeranpresskraft mittels zum Einsatz gelangender Druckregelventile gegeben. Neben dem Vorteil einer kurzen Einbaulänge ist im Vergleich zu einem Schraubenzugfederantrieb auch kein zusätzlicher Senkantrieb zum Absenken erforderlich, da sich dieser beim Entlüften des Antriebs schwerkraftbedingt absenkt und in dieser Position bleibt, ohne dass es einer zusätzlichen Sicherung bedarf.

Um die für das Anheben des Stromabnehmers erforderliche Kraft zu erzielen, müssen die zum Einsatz gelangenden Druckluftbalgzylinder einen relativ großen Durchmesser aufweisen. Hierdurch wird die Bauhöhe des Stromabnehmers negativ beeinflusst. Die Arbeitsrichtung der Druckluftbalgzylinder ist in Richtung Druck, so dass zur Erzielung einer linearen Hubbewegung eine technisch aufwendige und damit teure Führung des Druckluftbalgzylinders erfoderlich ist, da andernfalls ein Wegknicken des Zylinders erfolgen könnte. Durch die Notwendigkeit der zusätzlichen Führung, bei der es sich um eine gelenkige oder eine Linearführung handeln kann, ist eine zusätzliche mechanische Reibung zu überwinden, wodurch die Anpresskraft des Stromabnehmers beeinflusst wird.

Aus der AT 394 528 B ist ein Druckluftbalgzylinder bekannt, der einen Kolben sowie eine Kolbenstange aufweist, die in einem Gehäuse geführt werden. Von der Kolbenstange geht ein Seil aus, das mit einer Kurvenscheibe verbunden ist, die wiederum mit einem Wellenrohr eines Unterarms eines Stromabnehmers eine starre Einheit bildet.

Der vorliegenden Erfindung liegt das Problem zugrunde, einen Stromabnehmer der eingangs genannten Art so weiterzubilden, dass mit konstruktiv einfachen Maßnahmen ein Anheben bzw. Absenken des Stromabnehmers möglich ist, wobei gesonderte Führungen für die Antriebsmittel vermieden werden sollen. Auch soll der Antrieb ein geringes Gewicht bei kurzer Baulänge und -höhe aufweisen. Ferner soll auf einfache Weise die Anpresskraft des Stromabnehmers einstellbar sein.

Erfindungsgemäß wird das Problem im Wesentlichen dadurch gelöst, dass der Antrieb ein druckbeaufschlagbares Schlauchelement umfasst, das mit einem Verbindungselement mit der Unterschere des Stromabnehmers verbunden ist, und dass das Schlauchelement und das Verbindungselement eine Gesamtlänge derart aufweisen, dass in Abhängigkeit dieser der Stromabnehmer angehoben oder abgesenkt ist, wobei sich das Schlauchelement bei Druckbeaufschlagung verkürzt und bei Druckentlastung verlängert. Dabei geht das Schlauchelement vorzugsweise von einem auf Lagerböcken abgestützten Rahmen des Stromabnehmers aus und ist am verbindungselementfernliegenden Endbereich fixiert.

Das Verbindungselement, bei dem es sich z.B. um ein Seil oder eine Kette handeln kann, ist seinerseits um ein Umlenkelement wie Kurvenscheibe geführt, über das das Verbindungselement in einen schlauchelementseitigen und in einen unterscherenseitigen Abschnitt unterteilt ist, über die eine translatorische Bewegung des Schlauchelementes in eine Drehbewegung der Unterschere umlenkbar ist mit der Folge, dass der Stromabnehmer anheb- bzw. absenkbar ist.

Zu dem insbesondere mit Druckluft beaufschlagbaren Schlauchelement führt eine Leitung, in der ein Druckregulierventil vorhanden ist, um auf einfache Weise die Anpresskraft bzw. Hub- und Senkgeschwindigkeit des Stromabnehmers regulieren zu können.

In Weiterbildung ist vorgesehen, dass der Stromabnehmer bei entlüftbarem Schlauchelement schwerkraftbedingt absenkbar ist, so dass einer zusätzlicher von Schraubenzugfederantriebssystemen bekannter Senkantrieb nicht erforderlich ist.

Um die erforderliche Kraft aufzuwenden, kann der Antrieb mehrere druckabhängig längenveränderbare Schlauchelemente umfassen, die mit dem Verbindungselement verbunden sind, wobei die Schlauchelemente vorzugweise parallel angeordnet sind.

Erfindungsgemäß wird ein Stromabnehmer mit einem Antrieb vorgeschlagen, der sämtliche Vorteile der bekannten Antriebe Schraubenzugfeder und Druckluftbalg umfaßt, ohne deren Nachteile aufzuweisen.

Es wird erfindungsgemäß ein aus dem Bereich der Pneumatik bekannter als Fluidic Muscle bekannter Druckluftschlauch benutzt, der beim Beaufschlagen mit Druckluft in seiner Länge verkürzt und im Durchmesser vergrößert wird. Durch die bei Druckanstieg bedingte Längenverkürzung kann infolgedessen durch die hierdurch bedingte Verkürzung der Einheit Schlauchelement und Verbindungselement wie Seil oder Kette das erforderliche Verschwenken des Stromabnehmers erzielt werden. Hierzu wird das Verbindungselement entlang eines Umlenkelementes wie Kurvenscheibe geführt, die ihrerseits von der Drehachse des Stromabnehmers durchsetzt ist.

Der Antrieb arbeitet in Arbeitsrichtung, so dass in Folge dessen keine zusätzliche mechanische Führung erforderlich ist. Dies wiederum bedeutet, dass beim Verschwenken und beim Einleiten der Anpresskraft keine zusätzliche mechanische Reibung zu überwinden ist. Durch das Fehlen der Führung ergibt sich des Weiteren eine einfache, robuste und kostengünstige Konstruktion.

Der Durchmesser des erfindungsgemäß zum Einsatz gelangenden druckabhängig längenveränderbaren Schlauchelementes kann geringer als ein Druckluftbalg sein, so dass Vorteile in Bezug auf die Bauhöhe des Stromabnehmers gegeben sind. Auch weist der erfindungsgemäße Antrieb ein geringes Gesamtgewicht auf. Des Weiteren ist erwähntermaßen mit einfachen Mitteln die Anpreßkraft des Stromabnehmers einstellbar, und zwar mittels Druckregelventil. Das Absenken des Stromabnehmers erfolgt wie bei Druckluftbalgzylinderantrieben schwerkraftbedingt, so dass ein zusätzlicher Senkantrieb nicht erforderlich ist. Auch ist keine weitere Sicherung für die Senklage erforderlich.

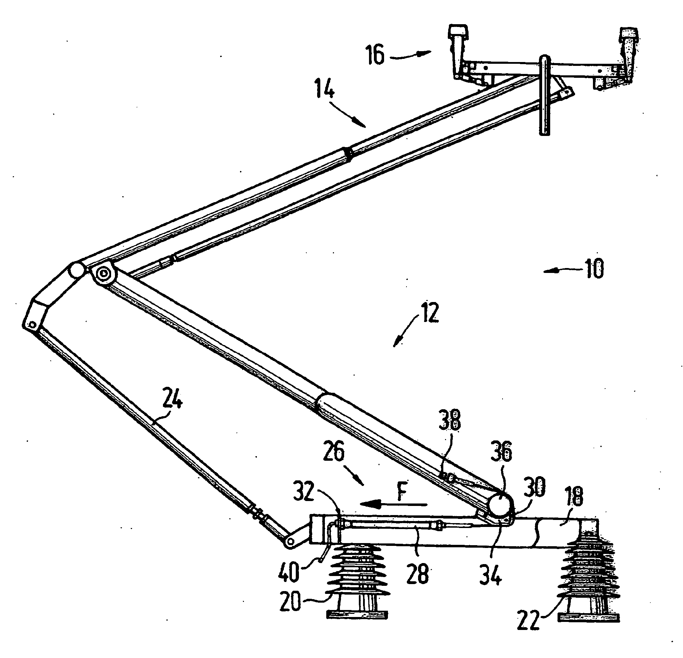

Weitere Einzelheiten und Vorteile der Erfindung ergeben sich nicht nur aus den Ansprüchen, den diesen zu entnehmenden Merkmalen - für sich und/oder in Kombination, sondern auch aus der nachfolgenden Beschreibung eines der Zeichnung zu entnehmenden bevorzugten Ausführungsbeispiels.

In der einzigen Figur ist rein prinzipiell ein Stromabnehmer 10 dargestellt, der vom Grundsätzlichen Aufbau und seiner Wirkungsweise hinreichend bekannt ist. Wesentliche Bestandteile des Stromabnehmers 10 sind dabei eine Unterschere 12 und eine Oberschere 14, von denen eine Wippe 16 ausgeht, die an einem Fahrdraht anlegbar ist, um die für ein Elektrofahrzeug erforderliche Stromversorgung sicherzustellen. Die Unterschere 12 geht von einem Grundrahmen 18 aus, der seinerseits über als Isolatoren ausgebildete Lagerböcke 20, 22 abgestützt ist, die von einem nicht dargestellten Dach eines Elektrofahrzeuges ausgehen. Des Weiteren geht von dem Rahmen 18 eine Kupplungsstange 24 aus, die zu der Oberschere 14 führt.

Um den Stromabnehmer 10 anzuheben bzw. abzusenken, ist ein Antrieb 26 vorgesehen, der einen druckabhängig verkürzbaren als Fluidic Muscle zu bezeichnenden Schlauch 28 umfaßt, der mit einem Verbindungselement wie Seil oder Kette 30 verbunden ist.

Das Schlauchelement 28 ist mit seinem verbindungselementseitig fernliegenden Ende 32 im Grundrahmen 18 fixiert. Das Verbindungselement wie Seil oder Kette 30 wird um ein Umlenkelement wie Kurvenscheibe 34, die von der Drehachse 36 der Unterschere 12 durchsetzt und um diese verschwenkbar bzw. drehbar ist, umgelenkt und ist im Abstand zur Drehachse 36 mit der Unterschere 12 verbunden (Verbindungspunkt 38).

Wird nun das Schlauchelement 28 über eine Leitung 40 mit Druckluft beaufschlagt, so verkürzt sich das Schlauchelement 28 mit der Folge, dass die hierdurch bedingte Zugkraft F auf das Verbindungselement 30 übertragen wird, wodurch die in Richtung der Kraft F verlaufende Translationsbewegung durch das Umlenken des Verbindungselementes 30 über die Kurvenscheibe 34 in eine Drehbewegung umgesetzt wird, wodurch der Stromabnehmer 10 in Richtung des nicht dargestellten Fahrdrahtes angehoben und die Wippe 16 mit einer vorgegebenen Anpresskraft an dem Fahrdraht selbst anliegen kann.

Die Regelung der Hubgeschwindigkeit über ein nicht dargestelltes Drosselventil in Leitung 40 des Stromabnehmers 10 sowie der Anpresskraft kann über ein nicht dargestelltes Druckregelventil erfolgen, welches in der Leitung 40 vorgesehen ist. Insoweit wird jedoch auf Techniken verwiesen, die von Druckluftbalgzylinderantrieben bekannt sind. In gleicher Weise erfolgt ein Absenken des Stromabnehmers 10, indem das Schlauchelement 28 über ein Schaltventil entlüftet wird. In diesem Fall senkt sich der Stromabnehmer 10 schwerkraftbedingt ab, wobei eine zusätzliche Sicherung in der Senklage nicht erforderlich ist.

## Patentansprüche

1. Stromabnehmer (10) für elektrisch betriebene Fahrzeuge, umfassend an einen Fahrdraht anlegbare Wippe (16), eine Unter- und Oberschere (12, 14) sowie einen Antrieb (26), über den der Stromabnehmer an dem Fahrdraht anlegbar oder von diesem absenkbar ist,
**dadurch gekennzeichnet,**
**dass** der Antrieb (26) ein druckbeaufschlagbares Schlauchelement (28) umfaßt, das über ein Verbindungselement (30) mit der Unterschere (12) des Stromabnehmers (10) verbunden ist, und dass das Schlauchelement und das Verbindungselement eine Länge derart aufweisen, dass in Abhängigkeit derer der Stromabnehmer angehoben oder abgesenkt ist, wobei sich das Schlauchelement bei Druckbeaufschlagung verkürzt und bei Druckentlastung verlängert.

2. Stromabnehmer nach Anspruch 1,
**dadurch gekennzeichnet,**
**dass** das Schlauchelement (28) von einem vorzugsweise auf Lagerböcken (20, 22) abgestützten Rahmen (18) des Stromabnehmers (10) ausgeht und am verbindungselementfernliegenden Bereich (32) fixiert ist.

3. Stromabnehmer nach zumindest einem der vorhergehenden Ansprüche,
**dadurch gekennzeichnet,**
**dass** das Verbindungselement (30) wie Seil oder Kette um ein Umlenkelement wie eine Umlenkscheibe (34) geführt ist, über das das Verbindungselement in einen schlauchelementseitigen und einen unterscherenseitigen Abschnitt unterteilt ist, über die eine translatorische Bewegung des Schlauchelementes (28) in eine Drehbewegung der Unterschere (12) umlenkbar ist.

4. Stromabnehmer nach zumindest einem der vorhergehenden Ansprüche,
**dadurch gekennzeichnet,**
**dass** das Schlauchelement (28) mit Druckluft beaufschlagbar ist.

5. Stromabnehmer nach zumindest einem der vorhergehenden Ansprüche,
**dadurch gekennzeichnet,**
**dass** das Schlauchelement (28) über eine ein Druckregulierventil aufweisende Leitung (40) mit Druckluft beaufschlagbar ist.

6. Stromabnehmer nach zumindest einem der vorhergehenden Ansprüche,
**dadurch gekennzeichnet,**
**dass** der Stromabnehmer (10) bei entflüftbarem Schlauchelement (28) schwerkraftbedingt absenkbar ist.

7. Stromabnehmer nach zumindest einem der vorhergehenden Ansprüche,
**dadurch gekennzeichnet,**
**dass** der Antrieb (26) mehrere druckabhängig längenveränderbare Schlauchelemente (28) umfasst, die mit dem Verbindungselement (30) verbunden sind.

8. Stromabnehmer nach zumindest einem der vorhergehenden Ansprüche,
**dadurch gekennzeichnet,**
**dass** die mehreren druckabhängig längenveränderbaren Schlauchelemente (28) parallel angeordnet sind.

9. Stromabnehmer nach zumindest einem der vorhergehenden Ansprüche,
**dadurch gekennzeichnet,**
**dass** die Umlenksäule (34) von der Drehachse (36) der Unterschere (12) durchsetzt und um bzw. mit dieser drehbar bzw. schwenkbar ist.

## Claims

1. Current collector (10) for electrically driven vehicles, comprising a rocker (16) contacting an overhead contact wire, a lower and an upper pantograph section (12, 14) and a drive unit (26) using which the current collector can contact the overhead contact wire or be lowered therefrom,
wherein
the drive unit (26) comprises a pressure-operated tube element (28) connected by a connecting element (30) to the lower pantograph section (12) of the current collector (10), and wherein the tube element and the connecting element have a length such that the current collector is raised or lowered depending thereon, with the tube element being shortened when pressure is applied and extended when the pressure is relieved.

2. Current collector according to Claim 1,
wherein
the tube element (28) extends from a frame (18) of the current collector (10) preferably supported on bearing blocks (20, 22) and is fixed at the area (32) away from the connecting element.

3. Current collector according to at least one of the previous claims,
wherein
the connecting element (30) such as a cable or chain is passed around a deflecting element such as a cam disc (34), by which the connecting element is divided into one section on the tube element side and one section on the lower pantograph section side, by which a translational movement of the tube element (28) can be converted into a rotational movement of the lower pantograph section (12).

4. Current collector according to at least one of the previous claims,
wherein
the tube element (28) can be operated with compressed air.

5. Current collector according to at least one of the previous claims,
wherein
the tube element (28) can be operated with compressed air via a line (40) having a pressure control valve.

6. Current collector according to at least one of the previous claims,
wherein
the current collector (10) can be lowered by gravity with a tube element (28) from which the air can be removed.

7. Current collector according to at least one of the previous claims,
wherein
the drive unit (26) comprises several tube elements (28) which can be varied in length depending on the pressure and which are connected to the connecting element (30).

8. Current collector according to at least one of the previous claims,
wherein
the several tube elements (28) which can be varied in length depending on the pressure are arranged parallel.

9. Current collector according to at least one of the previous claims,
wherein
the cam disc (34) is passed through by the rotary shaft (36) of the lower pantograph section (12) and can be rotated about / swivelled with the latter.

## Revendications

1. Collecteur de courant (10) pour véhicules à traction électrique comprenant un archet (16) pouvant être appuyé contre une caténaire, un bras inférieur et un bras supérieur (12, 14), ainsi qu'un entraînement (26) permettant d'appuyer le collecteur de courant contre la caténaire ou de l'éloigner de celle-ci,
**caractérisé en ce**
**que** l'entraînement (26) comprend un tuyau souple pouvant être soumis à une pression (28), qui est raccordé au bras inférieur (12) du collecteur de courant (10) par un élément de liaison (30), et en ce que le tuyau et l'élément de liaison sont de longueur telle qu'en fonction de ceux-ci le collecteur de courant est élevé ou abaissé, sachant que le tuyau se raccourcit lorsqu'il est sous pression et s'allonge lorsque la pression est relâchée.

2. Collecteur de courant selon la revendication 1,
**caractérisé en ce**
**que** le tuyau (28) part d'un cadre (18) du collecteur de courant (10) s'appuyant de préférence sur des isolateurs (20, 22) et est fixé dans la zone (32) située à distance de l'élément de liaison.

3. Collecteur de courant selon au moins une des revendications précédentes,
**caractérisé en ce**
**que** l'élément de liaison (30), pouvant être un câble ou une chaîne, est conduit autour d'un élément de renvoi tel qu'une poulie de renvoi (34) par l'intermédiaire duquel l'élément de liaison est divisé en une partie située du côté du tuyau d'une part et une partie située du côté du bras inférieur d'autre part, au moyen desquelles un mouvement de translation du tuyau (28) peut être transformé en un mouvement de rotation du bras inférieur (12).

4. Collecteur de courant selon au moins une des revendications précédentes,
**caractérisé en ce**
**que** le tuyau (28) peut être alimenté en air comprimé.

5. Collecteur de courant selon au moins une des revendications précédentes,
**caractérisé en ce**
**que** le tuyau (28) peut être alimenté en air comprimé par une ligne équipée d'une soupape régulatrice de pression (40).

6. Collecteur de courant selon au moins une des revendications précédentes,
**caractérisé en ce**
**que** le collecteur de courant (10) est abaissable sous l'action de la gravité lorsque le tuyau (28) est vidé de sa pression.

7. Collecteur de courant selon au moins une des revendications précédentes,
**caractérisé en ce**
**que** l'entraînement (26) comprend plusieurs tuyaux (28) dont la longueur varie selon la pression exercée et qui sont reliés à l'élément de liaison (30).

8. Collecteur de courant selon au moins une des revendications précédentes,
**caractérisé en ce**
**que** les différents tuyaux (28) dont la longueur varie selon la pression sont disposés parallèlement les uns aux autres.

9. Collecteur de courant selon au moins une des revendications précédentes,
**caractérisé en ce**
**que** la base de renvoi (34) est traversée par l'axe de rotation (36) du bras inférieur (12) et peut être tournée ou pivotée autour ou avec celui-ci.
